# EUROPEAN PATENT APPLICATION

(11) **EP 4 778 813 A1**
(43) Date of publication of application: **22.07.2026**
(21) Application number: 25223495.0
(22) Date of filing: 15.12.2025
(51) Int. Cl.: B62H 1/02, B62J 45/413, B62J 45/42, B62K 11/04, B62M 7/04

(54) **SADDLE-TYPE VEHICLE**

(30) Priority: 16.01.2025 JP 2025005865
(71) Applicant: Suzuki Motor Corporation, Hamamatsu-shi, Shizuoka 432-8611 (JP)
(72) Inventor: OMOSAKO, Takahiro, Hamamatsu-shi (JP); SUZUKI, Shohei, Hamamatsu-shi (JP)
(74) Representative: Haseltine Lake Kempner LLP

(57) **Abstract**

A saddle-type vehicle (1) includes a side stand (61) of which a position is configured to be changed between an upright position and a retracted position, a stand switch (71) configured to detect the position of the side stand, and a vehicle body frame (10) configured to support the side stand such that the side stand is configured to swing. The stand switch is located forward of a base end (63) of the side stand, in a side view. At least a part of the stand switch is located inward in a vehicle width direction from an outer surface of the base end of the side stand, in a bottom view.

## Description

### TECHNICAL FIELD

The present invention relates to a saddle-type vehicle.

### BACKGROUND ART

A saddle-type vehicle is provided with a stand switch that detects a position of a side stand. In recent years, there has been known a saddle-type vehicle in which a stand switch is provided on a support shaft of a side stand (see, for example, WO2018/123404). In the saddle-type vehicle described in WO2018/123404, the side stand is swingably supported by a stand bracket provided on a side frame via the support shaft. The support shaft protrudes outward in a vehicle width direction from a base end of the side stand, and the stand switch having a ring shape is installed on a protruding part of the support shaft. The stand switch detects whether the side stand is in an upright position or a retracted position.

However, in the saddle-type vehicle described in WO2018/123404, the stand switch protrudes outward in the vehicle width direction, making it easier for rider's legs to come into contact with the stand switch and limiting a bank angle.

### SUMMARY OF INVENTION

Aspect of non-limiting embodiments of the present disclosure relates to provide a saddle-type vehicle in which protrusion of a stand switch can be suppressed.

Aspects of certain non-limiting embodiments of the present disclosure address the features discussed above and/or other features not described above. However, aspects of the non-limiting embodiments are not required to address the above features, and aspects of the non-limiting embodiments of the present disclosure may not address features described above.

According to an aspect of the present disclosure, there is provided a saddle-type vehicle including:
a side stand of which a position is configured to be changed between an upright position and a retracted position;
a stand switch configured to detect the position of the side stand; and
a vehicle body frame configured to support the side stand such that the side stand is configured to swing,
in which the stand switch is located forward of a base end of the side stand, in a side view, and
at least a part of the stand switch is located inward in a vehicle width direction from an outer surface of the base end of the side stand, in a bottom view.

### BRIEF DESCRIPTION OF DRAWINGS

Exemplary embodiment(s) of the present invention will be described in detail based on the following figures, wherein:
Fig. 1 is a left side view of a saddle-type vehicle according to an example;
Fig. 2 is a side view of a lower part of a vehicle according to the example;
Fig. 3 is a perspective view of the lower part of the vehicle according to the example as viewed obliquely from below;
Fig. 4 is a side view of the lower part of the vehicle according to the example; and
Fig. 5 is a bottom view of the lower part of the vehicle according to the example.

### DESCRIPTION OF EMBODIMENTS

A side stand is swingably supported on a vehicle body frame of a saddle-type vehicle according to an aspect of the present invention. A position of the side stand is changed between an upright position and a retracted position, and the position of the side stand is detected by a stand switch. The stand switch is located forward of a base end of the side stand, and at least a part of the stand switch is located inward in a vehicle width direction from an outer surface of the base end of the side stand, so that the stand switch can be installed so that at least a part of the stand switch overlaps the base end of the side stand when viewed from the front. This reduces protrusion of the stand switch in the vehicle width direction relative to the side stand, making it less likely that rider's legs will come into contact with the stand switch, and preventing restrictions on a bank angle.

### Embodiment

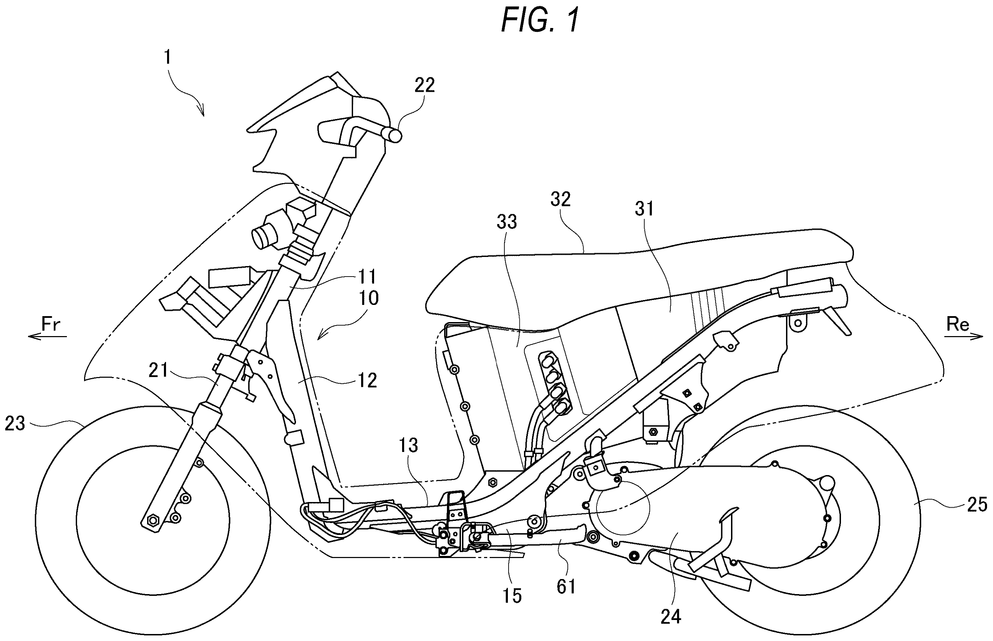

Hereinafter, a saddle-type vehicle according to this example will be described with reference to the accompanying drawings. Fig. 1 is a left side view of the saddle-type vehicle according to this example. In the following drawings, an arrow Fr indicates the front of the vehicle, an arrow Re indicates the rear of the vehicle, an arrow L indicates the left side of the vehicle, and an arrow R indicates the right side of the vehicle.

As illustrated in Fig. 1, a saddle-type vehicle 1 is configured by mounting various covers as an exterior of a vehicle body on an underbone-type vehicle body frame 10. A head pipe 11 is provided at a front portion of a vehicle body of the vehicle body frame 10, and a down frame 12 extends obliquely downward and rearward from the head pipe 11. A pair of side frames 13 are connected to a lower end of the down frame 12, and the pair of side frames 13 extend rearward and then rise obliquely rearward. A fixed-type battery 33 and an accommodation box 31 are installed inside the pair of side frames 13, and a seat 32 is installed above the battery 33 and the accommodation box 31.

A front fork 21 is supported on the head pipe 11 via a steering shaft (not illustrated) so as to be steerable. A handlebar 22 is provided on an upper part of the steering shaft, and a front wheel 23 is rotatably supported on a lower part of the front fork 21. A swing arm 24 is supported on pivot brackets 15 of the pair of side frames 13, and a rear wheel 25 is rotatably supported on a rear portion of the swing arm 24. Rear portions of the pair of side frames 13 and a rear portion of the swing arm 24 are connected via a rear suspension (not illustrated), and the rear suspension expands and contracts as the swing arm 24 swings, absorbing unevenness in a road surface.

A side stand 61 is supported by the pivot bracket 15 so as to be able to swing. When the side stand 61 is in an upright position, the vehicle body stands on its own, and when the side stand 61 is in a retracted position, the vehicle body is released from its standing position. Typically, in such saddle-type vehicles, a stand switch is provided on a pivot shaft of the side stand to detect a position of the side stand, but the stand switch protrudes outward in a vehicle width direction, making it more likely to hit rider's legs and limiting a bank angle. Therefore, in this example, an operator of the stand switch passes through the stand bracket, and the stand switch and the side stand are arranged in front and behind each other.

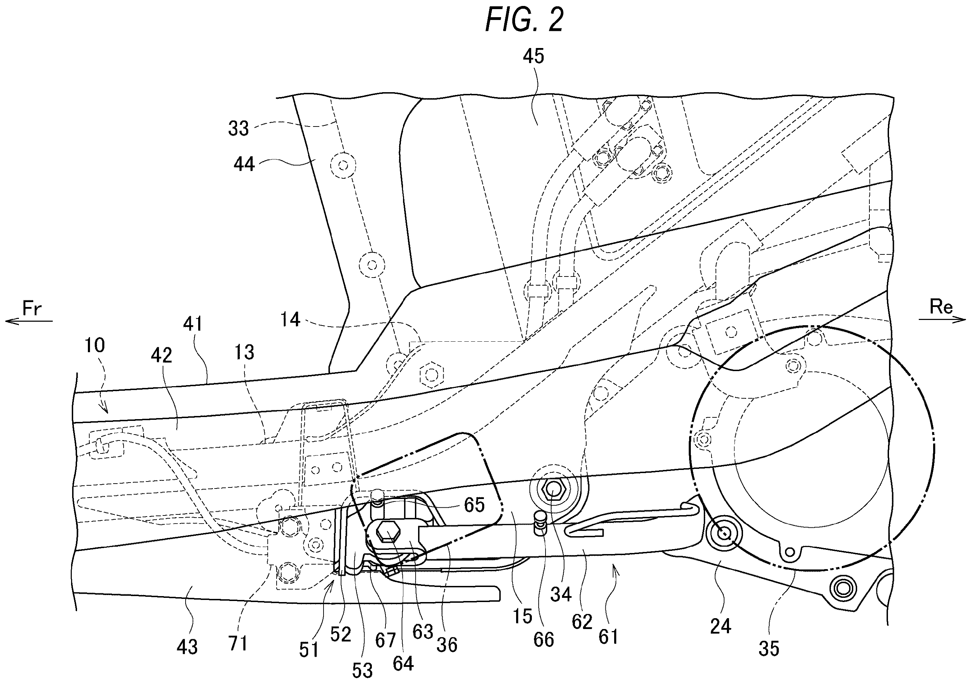

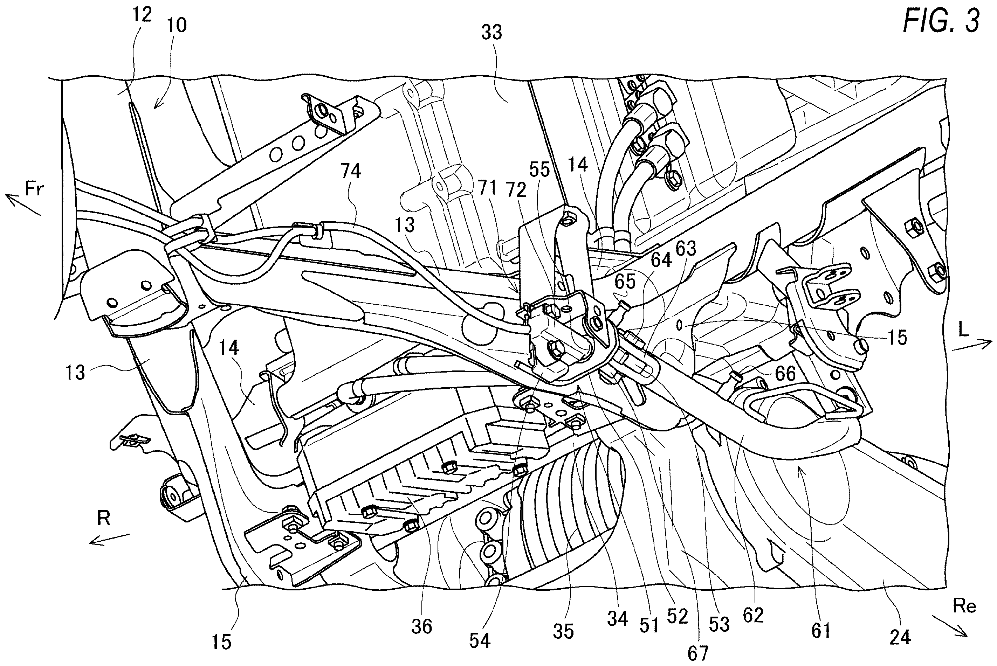

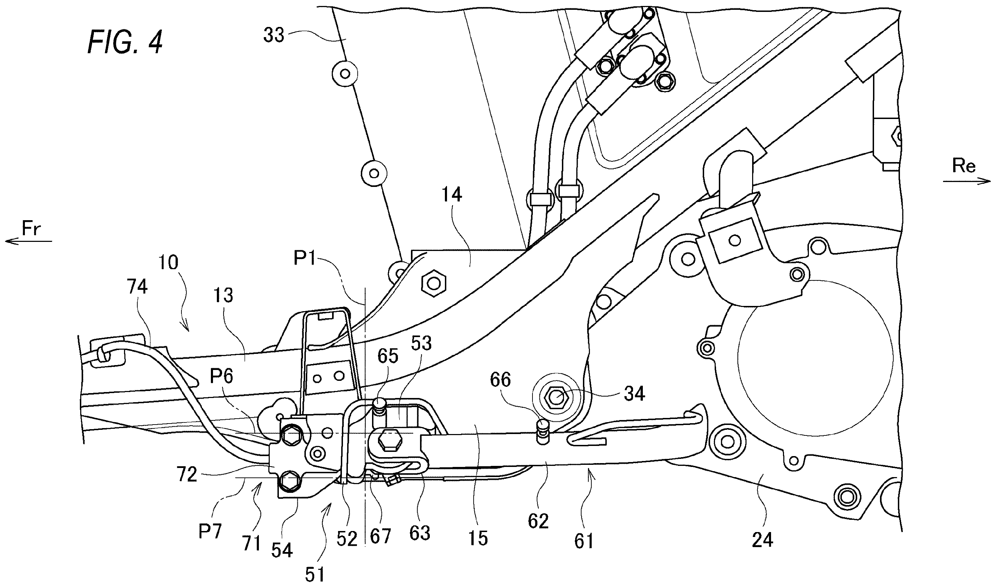

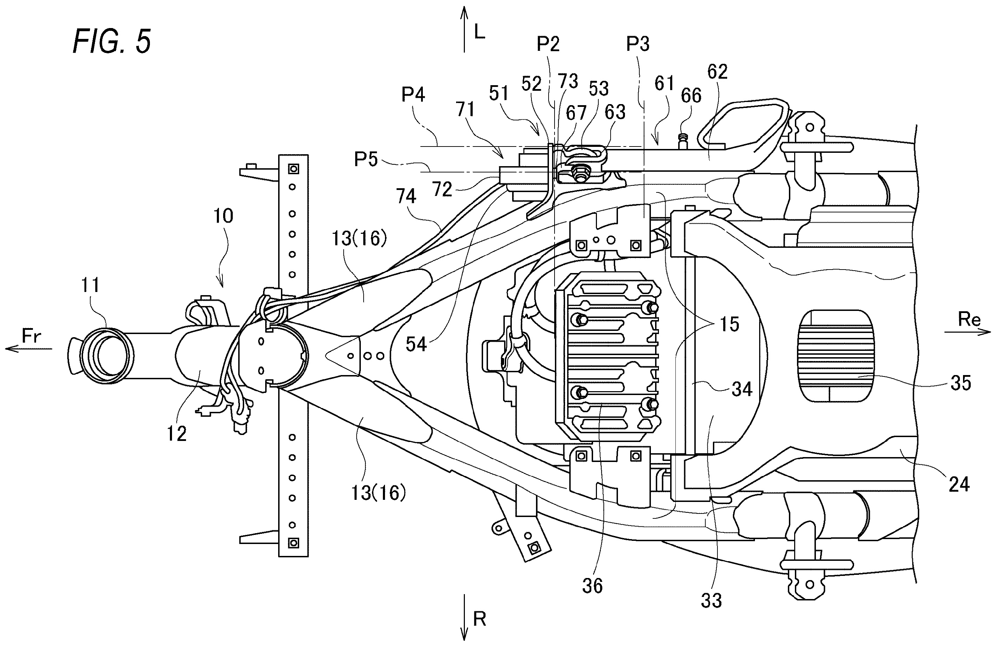

A front structure of the saddle-type vehicle will be described with reference to Figs. 2 to 5. Fig. 2 is a side view of a lower part of the vehicle according to this example. Fig. 3 is a perspective view of the lower part of the vehicle according to this example as viewed obliquely from below. Fig. 4 is a side view of the lower part of the vehicle according to this example. Fig. 5 is a bottom view of the lower part of the vehicle according to this example. In Figs. 3 to 5, covers are omitted.

As illustrated in Fig. 2, the saddle-type vehicle 1 is provided with a floor board 41 as a low floor board on which the rider's legs can rest. The pair of side frames 13 are positioned below the floor board 41, and the pair of side frames 13 pass below the floor board 41 and then rise obliquely upward and rearward. Front half portions of the pair of side frames 13 is covered from the sides by a pair of lower side covers 42 and is covered from below by a lower under cover 43. Rear half portions of the pair of side frames 13 is covered from the front by a body cover 44 and is covered from the sides by a pair of rear side covers 45.

A battery bracket 14 protrudes upward from rising portions of the pair of side frames 13, and the battery bracket 14 supports lower front corners of the battery 33 that is rectangular in side view. The pivot brackets 15 protrude downward from the rising portions of the pair of side frames 13, and the swing arm 24 is supported by the pivot brackets 15 via a pivot shaft 34 so as to be able to swing. A front side of the swing arm 24 serves as a motor case, and a motor 35 is accommodated inside the motor case. An inverter 36 is installed as an electronic device inside the pair of side frames 13.

As illustrated in Figs. 2 and 3, a stand bracket 51 is joined to one (left side) of the pivot brackets 15 of the vehicle body frame 10. The stand bracket 51 is formed by bending a metal piece, and a partition wall 52 is provided on the stand bracket 51 so as to separate front and rear half portions of the stand bracket 51. The side stand 61 is supported on the rear half portion of the stand bracket 51 via a support plate 53, and a stand switch 71 is fixed to the front half portion of the stand bracket 51 via a mounting plate 54. In this manner, the side stand 61 and the stand switch 71 are arranged in front and behind each other.

A U-shaped bracket 63 is provided on a base end side of a leg portion 62 of the side stand 61, the leg portion extending straightly. The support plate 53 of the stand bracket 51 is positioned inside the U-shaped bracket 63, and the U-shaped bracket 63 is pivotally supported on the support plate 53 via a pivot bolt 64. As a result, the side stand 61 changes its position between the upright position in which the vehicle body stands upright with the pivot bolt 64 as a fulcrum and a retracted position in which the upright position is released. A pin 65 erected on the support plate 53 and a pin 66 erected on the leg portion 62 are connected via a tension spring (not illustrated), which assists a swinging operation of the side stand 61 and maintains the stand position.

The U-shaped bracket 63 is provided with a plate cam 67 (see Fig. 5 in particular) surrounding the pivot bolt 64. The partition wall 52 of the stand bracket 51 is interposed between the U-shaped bracket 63 and the stand switch 71. An operator 73 (see Fig. 5) protrudes rearward from a switch case 72 of the stand switch 71 and penetrates the partition wall 52 of the stand bracket 51. An opening 55 is formed in the partition wall 52 of the stand bracket 51, and a tip of the operator 73 enters the U-shaped bracket 63 side through the opening 55 of the partition wall 52. The operator 73 is pressed against the plate cam 67 by a reaction force of a spring (not illustrated) in the switch case 72.

As the side stand 61 swings, the operator 73 is pushed back by the plate cam 67, and the operator 73 is operated by the plate cam 67 in a pushing direction (forward in this example) relative to the switch case 72. An amount of operation of the operator 73 changes depending on the cam profile of the plate cam 67, and the retracted position of the side stand 61 is detected according to the amount of operation of the operator 73. When the operator 73 is pushed deep into the switch case 72, the stand switch 71 is turned on and an operating circuit of the saddle-type vehicle 1 is made conductive. A cable 74 extends forward from the switch case 72 and is supported by one of the side frames 13.

The stand switch 71 is covered from the side (left side) and below by the lower under cover 43, and the lower under cover 43 protects the stand switch 71 from rainwater, flying stones, and other foreign objects. On the other hand, a rear side surface of the lower under cover 43 is cut out, and the U-shaped bracket 63 of the side stand 61 is exposed from the cutout portion of the lower under cover 43. The support plate 53 of the stand bracket 51 supporting the side stand 61 is inclined so that the side stand 61 can be swung through the cutout portion of the lower under cover 43, thereby suppressing interference between the lower under cover 43 and the side stand 61.

As illustrated in Figs. 4 and 5, an inverter 36 is attached as an electronic device to the pair of side frames 13 at a lower portion of the vehicle body frame 10. The motor 35 is connected to the inverter 36 via a cable (not illustrated), and the rotation of the motor 35 is controlled by the inverter 36. The front half portions of the pair of side frames 13 are formed as a pair of widened portions 16 extending obliquely rearward from the lower end of the down frame 12 so as to increase a distance therebetween. The inverter 36 is installed on an inner side of the pair of widened portions 16 in the vehicle width direction, and the pair of widened portions 16 protect the inverter 36 from an external impact.

The stand bracket 51 is provided near a rear end of the widened portion 16 of one (left) side frame 13, and the U-shaped bracket 63 of the side stand 61 and the stand switch 71 are arranged in the front and rear of the stand bracket 51, with the partition wall 52 interposed therebetween. As described above, the operator 73 of the stand switch 71 passes through the partition wall 52 and is in contact with the plate cam 67 of the U-shaped bracket 63. In this way, by having the operator 73 pass through the partition wall 52, the position of the side stand 61 can be detected even when the stand switch 71 and the U-shaped bracket 63 are arranged in front and behind each other. Furthermore, a neck of the operator 73 is surrounded by the partition wall 52, so that the operator 73 is protected from an impact and the like.

In a side view, the stand switch 71 is located forward of a front end position P1 of the U-shaped bracket 63 of the side stand 61. More specifically, the U-shaped bracket 63 of the side stand 61 overlaps the inverter 36 in a side view, and the stand switch 71 is located forward of a front end position P2 of the inverter 36 in a bottom view. Furthermore, the stand switch 71 is located forward of a rear end position P3 of the pair of widened portions 16 in a bottom view. An installation space for the inverter 36 is secured inside the pair of side frames 13, and an installation space for the stand switch 71 is secured in front of one of the side frames 13 (widened portions 16), which is inclined inward in the vehicle width direction toward the front.

A minimum thickness dimension of the stand switch 71 faces the vehicle width direction, and the entirety of the stand switch 71 is located inward in the vehicle width direction from a side end position P4 of an outer surface of the U-shaped bracket 63 when viewed from below. More specifically, in bottom view, most of the stand switch 71 is located inward in the vehicle width direction from an outermost position P5 of one side frame 13 (widened portion 16) in the vehicle width direction. By positioning the stand switch 71 below the floor board 41, contact between the rider's legs and the stand switch 71 is reduced. The stand switch 71 is prevented from protruding outward in the vehicle width direction, and thus a bank angle of the saddle-type vehicle 1 is increased.

In a bottom view, the partition wall 52 of the stand bracket 51 protrudes outward in the vehicle width direction beyond the stand switch 71, and the stand switch 71 is positioned inward in the vehicle width direction beyond an outer end of the stand bracket 51. The partition wall 52 increases the rigidity of the stand bracket 51, and the stand bracket 51 protects the stand switch 71 from an impact from the outside in the vehicle width direction. In a side view, a central portion of the stand switch 71 is located between an upper end position P6 and a lower end position P7 of the U-shaped bracket 63 in the retracted position. The stand switch 71 and the U-shaped bracket 63 of the side stand 61 are at approximately the same height, ensuring a bank angle.

As described above, according to the saddle-type vehicle 1 of this example, the stand switch 71 is provided in front of the side stand 61, so that the stand switch 71 can be installed so that at least a part of the stand switch 71 overlaps the U-shaped bracket 63 of the side stand 61 when viewed from the front. This reduces protrusion of the stand switch 71 in the vehicle width direction relative to the side stand 61, making it less likely that rider's legs will come into contact with the stand switch 71, and preventing restrictions on a bank angle.

In this example, the stand switch detects the retracted position of the side stand, but the stand switch may also detect a freestanding position of the side stand, or the stand switch may detect both the retracted position and the freestanding position of the side stand.

In addition, in this example, the base end of the side stand is configured as a U-shaped bracket, but the shape of the base end of the side stand is not particularly limited as long as it is configured to be swingably supported on the vehicle body frame.

In addition, in this example, the entirety of the stand switch is located inward in the vehicle width direction from the outer surface of the base end of the side stand when viewed from below, but it is sufficient when at least a part of the stand switch is located inward in the vehicle width direction from the outer surface of the base end of the side stand.

In addition, in this example, the central portion of the stand switch is located between the upper and lower ends of the base end of the side stand when viewed from the side, but it is sufficient when at least a part of the stand switch is located between the upper and lower ends of the base end of the side stand. For example, the entirety of the stand switch may be located between the upper and lower ends of the base end of the side stand.

In addition, in this example, an opening is formed in the partition wall of the stand bracket, and the operator of the stand switch fits into this partition wall, but the present invention is not limited to this configuration. It is sufficient that the operator of the stand switch penetrates the partition wall. For example, a cutout may be formed in the partition wall and the operator of the stand switch may fit into this cutout.

Furthermore, in this example, an inverter is described as an example of an electronic device, but the electronic device may be an Electronic Control Unit (ECU) or the like.

In addition, in this example, when viewed from below, most of the stand switch is located inward in the vehicle width direction from the outermost position of one of the side frames in the vehicle width direction, but it is sufficient when at least a part of the stand switch is located inward in the vehicle width direction from the outermost position of one of the side frames in the vehicle width direction. For example, the entirety of the stand switch may be located on the inner side in the vehicle width direction than the outermost position of one of the side frames in the vehicle width direction.

Furthermore, a stand switch installation structure of this example is not limited to being adopted in the saddle-type vehicle described above, and may be adopted in other types of saddle-type vehicles. A saddle-type vehicle is not limited to all vehicles in which a rider sits astride a seat, but also includes scooter-type vehicles in which a rider does not sit astride a seat.

As described above, a first aspect is a saddle-type vehicle including a side stand (61) that changes a position between an upright position and a retracted position, a stand switch (71) that detects the position of the side stand, and a vehicle body frame (10) that supports the side stand so that the side stand can swing, where the stand switch is located forward of a base end (U-shaped bracket 63) of the side stand in a side view, and at least a part of the stand switch is located inward in a vehicle width direction from an outer surface of the base end of the side stand when viewed from below. According to this configuration, the stand switch is provided in front of the side stand, so that the stand switch can be installed so that at least a part of the stand switch overlaps the base end of the side stand in a front view. This reduces protrusion of the stand switch in the vehicle width direction relative to the side stand, making it less likely that rider's legs will come into contact with the stand switch, and preventing restrictions on a bank angle.

In a second aspect, in the first aspect, an entirety of the stand switch is located inward in the vehicle width direction from the outer surface of the base end of the side stand when viewed from below. According to this configuration, the stand switch does not protrude outward in the vehicle width direction.

In a third aspect, in the first or second aspect, at least a part of the stand switch is located between an upper end and a lower end of the base end of the side stand in the retracted position in a side view. According to this configuration, the stand switch and the base end of the side stand are at approximately the same height, ensuring the bank angle.

In a fourth aspect, in any one of the first to third aspects, the side stand is supported by a stand bracket (51) of the vehicle body frame, and the stand switch is located inward in the vehicle width direction relative to an outer end of the stand bracket when viewed from below. According to this configuration, the stand bracket protects the stand switch from an impact from the outside in the vehicle width direction.

In a fifth aspect, in the fourth aspect, the stand bracket has a partition wall (52) interposed between the base end of the side stand and the stand switch, and the partition wall protrudes outward in the vehicle width direction beyond the stand switch when viewed from below. According to this configuration, the partition wall increases the rigidity of the stand bracket, and the stand bracket protects the stand switch from an impact from the outside in the vehicle width direction.

In a sixth aspect, in the fifth aspect, an operator (73) for the stand switch passes through the partition wall. According to this configuration, the operator of the stand switch passes through the partition wall, so that the position of the side stand can be detected even when the stand switch and the base end of the side stand are arranged in front and behind each other. Furthermore, a neck of the operator is surrounded by the partition wall, thereby protecting the operator from an impact and the like.

In a seventh aspect, in any one of the first to sixth aspects, the saddle-type vehicle further includes an electronic device (inverter 36) attached to a lower portion of the vehicle body frame, where the vehicle body frame includes a down frame (12) extending downward from a head pipe (11), and a pair of side frames (13) extending rearward from a lower end of the down frame, the electronic device is installed inside the pair of side frames, and the stand switch is located forward of the electronic device when viewed from below. According to this configuration, an installation space for the electronic device is secured inside the pair of side frames, and an installation space for the stand switch is secured in front of the pair of side frames.

In an eighth aspect, in any one of the first to seventh aspects, the vehicle body frame includes a down frame extending downward from a head pipe, and a pair of side frames extending rearward from a lower end of the down frame, front half portions of the pair of side frames are formed as a pair of widened portions (16) extending obliquely rearward from the lower end of the down frame so as to increase an opposing distance, and when viewed from below, at least a part of the stand switch is located forward of rear ends of the pair of widened portions and inward in the vehicle width direction relative to an outermost position of one of the side frames in the vehicle width direction. According to this configuration, an installation space for the stand switch is secured in front of the widened portion of one of the side frames, which is inclined forward inward in the vehicle width direction, and the stand switch is prevented from protruding outward in the vehicle width direction.

In a ninth aspect, in the eighth aspect, an entirety of the stand switch is located inward in the vehicle width direction relative to the outermost position of the one side frame in the vehicle width direction when viewed from below. This configuration can prevent the stand switch from protruding outward in the vehicle width direction.

Although the present example is described, other examples may be made by combining the above-described example and modification examples in whole or in part.

Furthermore, the technology of the present invention is not limited to the above-described example, and may be modified, substituted, or changed in various ways without departing from the spirit and scope of the technical concept. Furthermore, when technological advances or derived technologies allow the technical ideas to be realized in a different way, they may be implemented using that method. Therefore, the claims cover all embodiments that may fall within the scope of the technical concept.

## Claims

1. A saddle-type vehicle comprising:
a side stand of which a position is configured to be changed between an upright position and a retracted position;
a stand switch configured to detect the position of the side stand; and
a vehicle body frame configured to support the side stand such that the side stand is configured to swing,
wherein the stand switch is located forward of a base end of the side stand, in a side view, and
at least a part of the stand switch is located inward in a vehicle width direction from an outer surface of the base end of the side stand, in a bottom view.

2. The saddle-type vehicle according to claim 1, wherein an entirety of the stand switch is located inward in the vehicle width direction from the outer surface of the base end of the side stand, in the bottom view.

3. The saddle-type vehicle according to claim 1 or 2, wherein at least a part of the stand switch is located between an upper end and a lower end of the base end of the side stand in the retracted position, in a side view.

4. The saddle-type vehicle according to claim 1 or 2,
wherein the side stand is supported by a stand bracket of the vehicle body frame,
and
the stand switch is located inward of an outer end of the stand bracket in the vehicle width direction, in the bottom view.

5. The saddle-type vehicle according to claim 4,
wherein the stand bracket includes a partition wall interposed between the base end of the side stand and the stand switch, and
the partition wall protrudes outward in the vehicle width direction beyond the stand switch, in the bottom view.

6. The saddle-type vehicle according to claim 5, wherein an operator for the stand switch passes through the partition wall.

7. The saddle-type vehicle according to claim 1 or 2, further comprising:
an electronic device attached to a lower portion of the vehicle body frame,
wherein the vehicle body frame includes a down frame extending downward from a head pipe, and a pair of side frames extending rearward from a lower end of the down frame,
the electronic device is installed inside the pair of side frames, and
the stand switch is located forward of the electronic device, in the bottom view.

8. The saddle-type vehicle according to claim 1 or 2,
wherein the vehicle body frame includes a down frame extending downward from a head pipe, and a pair of side frames extending rearward from a lower end of the down frame,
front half portions of the pair of side frames are formed as a pair of widened portions extending obliquely rearward from the lower end of the down frame so as to increase an opposing distance, and
in the bottom view, at least a part of the stand switch is located forward of rear ends of the pair of widened portions and inward in the vehicle width direction relative to an outermost position of one of the side frames in the vehicle width direction.

9. The saddle-type vehicle according to claim 8, wherein an entirety of the stand switch is located inward, in the vehicle width direction, of the outermost position of the one side frame in the vehicle width direction, in the bottom view.
